# EUROPÄISCHE PATENTSCHRIFT

(11) **EP 2 440 386 B1**
(45) Veröffentlichungstag und Bekanntmachung des Hinweises auf die Patenterteilung: **25.12.2013**
(21) Anmeldenummer: 10722640.9
(22) Anmeldetag: 02.06.2010
(51) Int. Cl.: B29C 67/00, B29C 41/12, B22F 3/105

(54) **VORRICHTUNG UND VERFAHREN ZUR BESCHICKUNG EINER MATERIALSCHICHT AUF EINE BAUPLATTFORM ODER AUF WENIGSTENS EINE AUF DER BAUPLATTFORM BEFINDLICHEN MATERIALSCHICHT ZUR HERSTELLUNG EINES GEGENSTANDES IM WEGE EINES GENERATIVEN HERSTELLUNGSVERFAHRENS**
DEVICE AND METHOD FOR FEEDING A MATERIAL LAYER ONTO A CONSTRUCTION PLATFORM, OR ONTO AT LEAST ONE MATERIAL LAYER PRESENT ON THE CONSTRUCTION PLATFORM, FOR PRODUCING AN OBJECT IN THE COURSE OF A GENERATIVE PRODUCTION METHOD
DISPOSITIF ET PROCÉDÉ DE CHARGEMENT D'UNE COUCHE DE MATÉRIAU SUR UNE PLATE-FORME DE CONSTRUCTION OU SUR AU MOINS UNE COUCHE DE MATÉRIAU SE TROUVANT SUR LA PLATE-FORME DE CONSTRUCTION POUR LA FABRICATION D'UN OBJET AU MOYEN D'UN PROCÉDÉ DE FABRICATION GÉNÉRATIF

(30) Priorität: 09.06.2009 DE 102009024334
(43) Veröffentlichungstag der Anmeldung: 18.04.2012
(73) Patentinhaber: Fraunhofer-Gesellschaft zur Förderung der angewandten Forschung e.V., 80686 München (DE)
(72) Erfinder: GRZESIAK, Andrzej, 70569 Stuttgart (DE); REFLE, Oliver, 72768 Reutlingen (DE); RICHTER, Hans-Jürgen, 01257 Dresden (DE); LENK, Reinhard, 01328 Dresden (DE)
(74) Vertreter: Rösler, Uwe
(86) Internationale Anmeldenummer: PCT/EP2010/003351
(87) Internationale Veröffentlichungsnummer: WO 2010/142398

(56) Entgegenhaltungen:
- EP-A1- 0 693 591
- EP-A1- 1 719 607
- EP-A2- 0 435 564
- WO-A1-2008/061764
- JP-A- 6 155 589
- US-A- 5 447 822

## Beschreibung

### Technisches Gebiet

Die Erfindung bezieht sich auf eine Vorrichtung sowie ein Verfahren zur Herstellung eines Gegenstandes im Wege eines generativen Herstellungsverfahrens mit einem ein pulver- oder granulatartiges Material bevorratendes Materialreservoir, einer Bauplattform und einer Vorrichtung zur Beschickung einer Materialschicht auf die Bauplattform oder auf wenigstens eine auf der Bauplattform befindlichen Materialschicht, wobei die Vorrichtung zur Beschickung längs einer Bewegungsebene linearbeweglich gelagert ist, längs der das Materialreservoir und die Bauplattform nebeneinander angeordnet sowie zu dieser orthogonal auslenkbar sind.

### Stand der Technik

Generative Fertigungsverfahren werden bereits seit vielen Jahren erfolgreich zur Herstellung dreidimensionaler Gegenstände eingesetzt, die im Wege iterativen Auf- oder Aneinanderfügens von Schicht- oder Volumenelementen hergestellt werden. Als Ausgangsmaterialien steht eine Vielzahl unterschiedlicher Werkstoffe zur Verfügung, die sowohl in Pulver- oder Granulatform aber auch in Form von Fluiden bspw. als Suspensionen, vorliegen können.

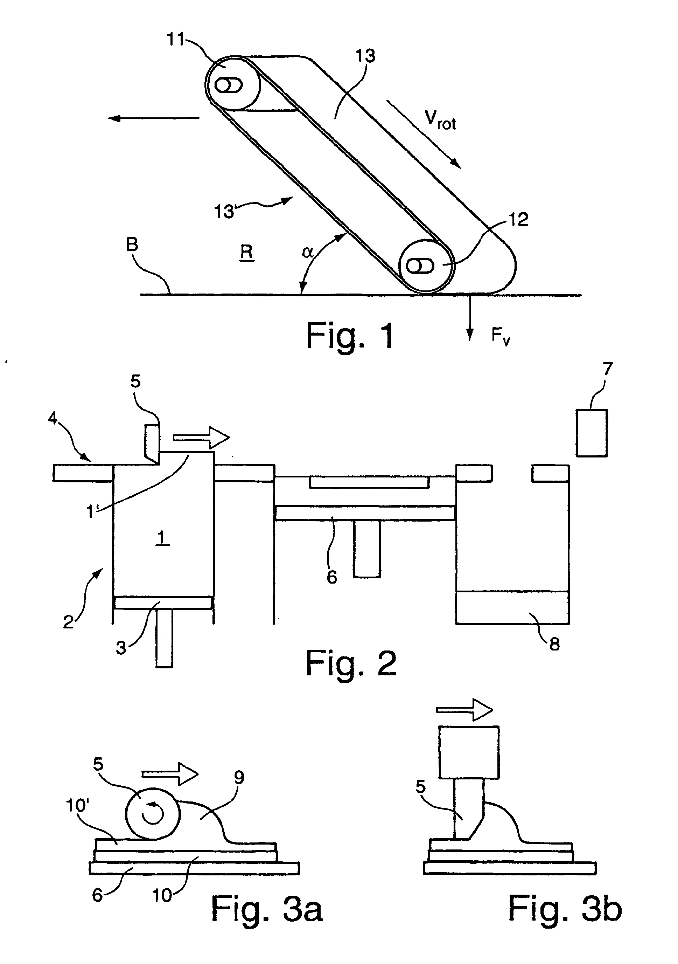

Neben generativen Laminier- und Extrudiertechniken, die auch unter der Bezeichnung Laminated Object Manufacturing (LOM) bzw. Fused Deposition Modelling (FDM) bekannt sind, beziehen sich die weiteren Betrachtungen auf generative Herstellungsverfahren, bei denen zur Ausbildung eines dreidimensionalen Gegenstandes eine Vielzahl einzelner Materialschichten auf einer vorzugsweise vertikal absenkbaren Bauplattform nacheinander abgeschieden wird, die einzeln einem lokal selektiven Verfestigungsprozess unterzogen werden. Zur Illustration eines derartigen Herstellungsverfahrens sei auf die Figur 2 verwiesen, aus der eine schematische Darstellung einer Vorrichtung zur Herstellung eines Gegenstandes im Wege schichtweiser Materialabscheidung auf einer Bauplattform zu entnehmen ist.

Zur Bevorratung des zumeist in Pulver- oder Granulatform vorliegenden Materials 1 dient ein Materialreservoir 2, das aus einem nach oben offen ausgebildeten Behältnis besteht, dessen Boden 3 vertikal schrittweise nach oben verfahrbar ist. Durch geeignete Vertikaleinstellung des Behältnisbodens 3 überragt eine in der Schichtdicke vorgebbare Materialschicht 1' eine obere Abscheideebene 4, die sich unmittelbar an der oberen Behältnisöffnung des Materialreservoirs 2 anschließt. Mit Hilfe einer Abstreifvorrichtung 5, die im gezeigten Ausführungsbeispiel gemäß Figur 2 von links nach rechts linear beweglich verfahrbar ist, wird die die Abscheideebene 4 überragende Materialschicht 1' abgestreift und in Bewegungsrichtung der Abstreifvorrichtung 5 zu einer sich unmittelbar rechts anschließenden Bauplattform 6 geschoben. Die Bauplattform 6 ist gleichfalls vertikal absenkbar gelagert und relativ zur Abscheideebene 4 derart abgesenkt, so dass das von der Abstreifvorrichtung 5 mitgeführte Material in den schichtförmigen Bauraum zwischen der Abscheideebene 4 und der zu oberst auf der Bauplattform 6 bereits abgeschiedenen Materialschicht gleichmäßig verteilt aufgetragen werden kann. In dem dargestellten Beispiel befindet sich auf der Bauplattform 6 durch vorangegangene Abscheidevorgänge bereits aufgebrachtes Material, das in bestimmten Schichtbereichen verfestigt worden ist. Zur lokalen Verfestigung der jeweils zu oberst aufgebrachten Materialschicht sind unterschiedliche Verfahrenstechniken bekannt. Im Rahmen des sogenannten selektiven Sinterns werden in Abhängigkeit des jeweils eingesetzten Materials Laser- oder Elektronenstrahlquellen eingesetzt, mit denen das auf der Bauplattform abgeschiedene Material örtlich leicht an- oder aufgeschmolzen wird, wodurch sich nach Abkühlung eine sich fest ausbildende Materialschicht ergibt. Neben den bekannten Bestrahlungstechniken, die eine Materialverfestigung auf Basis koagulativer Prozesse herbeiführen, können auch chemische Aktivatoren in Form sogenannter Binder mittels geeignet ausgebildeter Applikatoren, vorzugsweise in Form von Inkjet-Druckköpfen, lokal auf die oberste Materialschicht appliziert werden, wodurch die Pulver- bzw. Granulatteilchen innerhalb der Materialschicht miteinander verkleben und einen festen Haftverbund zu den darunter liegenden verfestigten Materialschichten herstellen. In Figur 2 ist ein derartiger Druckkopf mit dem Bezugszeichen 7 versehen, der horizontal über die zuoberst auf der Bauplattform 6 abgeschiedene Materialschicht längs der Bewegungsebene 4 ausdenkbar ist. Nur der Vollständigkeit halber sei darauf hingewiesen, dass sich rechts an der Bauplattform ein Auffangbehälter 8 befindet, in den das überschüssige Material von der Abstreifvorrichtung 5 eingebracht wird, das sich für eine Wiederverwendung eignet.

Von besonderem Interesse ist die Herstellung möglichst kompakter und homogen verteilter Materialschichten auf der Bauplattform, zu deren Realisierung unterschiedliche Werkzeuge eingesetzt werden können. In Figur 3a ist hierzu eine als rotierende Walze ausgebildete Abstreifvorrichtung 5 illustriert, die eine in Bewegungsrichtung (siehe Pfeildarstellung) vorgebbar große Materialportion 9 mit sich führt. Die rotierende Walze ist zur Bauplattform 6 bzw. zu einer bereits darauf befindlichen Materialschicht 10 derart vertikal beabstandet geführt, dass sich unmittelbar der Walze in Bewegungsrichtung nachfolgend eine gleichmäßige, "frische" Materialschicht 10' ausbildet. Durch geeignete Abstandseinstellung zwischen der rollenförmigen Abstreifvorrichtung 5 und der zuoberst auf der Bauplattform 6 bereits aufgebrachten Materialschicht 10 können minimale Schichtdicken von ca. 100 µm erzeugt werden. In Figur 3b ist eine klingenartig ausgebildete Abstreifvorrichtung 5 illustriert, die als Rakel oder Rakelklinge bezeichnet wird. Grundsätzlich erfolgt der Materialauftrag im Bereich der Bauplattform in der gleichen Weise wie im zuvor beschriebenen Fall der Bilddarstellung in Figur 3a.

Die Druckschrift DE 198 53 978 C1 zeigt einen Schieber, mit dem das Material von einem Materialreservoir abgestreift und schichtweise auf eine Bauplattform aufgetragen wird. Zusätzlich weist die Vorrichtung eine starr vor dem Schieber befestigte Schleifeinrichtung in Form einer mit Schleifmaterial beschichteten Walze auf, mit der die Oberfläche der bearbeiteten, d.h. mittels Laser aufgeschmolzenen, Schicht vor dem erneuten Materialauftrag geglättet wird.
Zudem sind Auftragsverfahren bekannt, die Bürsten, Trichter oder Siebtechniken anwenden, in allen bekannten Fällen bilden sich jedoch nur leicht oder nur unzureichend vorverdichtete bzw. kompaktierte Materialschichten auf der Bauplattform aus, so dass selbst nach der weiteren Applikation von Strahlungsenergie oder chemischen Aktivatoren zu Verfestigung selektiver Schichtbereiche sogenannte Grünteile mit einer Grünteildichte entstehen, die es zu erhöhen gilt, zumal auf diese Weise hergestellte Bauteile zumeist weiteren Behandlungsschritten unterzogen werden, bspw. thermische Härtungsprozesse, die mit Materialschrumpfungen oder Formverzug verbunden sein können, die es zu vermeiden gilt, insbesondere in Fällen, in denen es sich bei den Gegenständen um Präzisionsteile bspw. Teile aus der Prothetik handelt.

Die US 5,637,175 A zeigt eine Vorrichtung zur Durchführung eines generativen Fertigungsverfahren, bei dem Material aus einem über einer Bauplattform angeordnetem Materialreservoir auf die Bauplattform aufgebracht wird. Durch Verfahren der Bauplattform wird die Materialschicht an einer Glätteinrichtung geglättet und anschließend mittels einer stationär angeordneten Walze oder auch eines über Rollen geführten Bandes komprimiert.

Die Druckschrift DE 10 2006 019 860 A1 bezieht sich ein generatives Fertigungsverfahren zur Herstellung von dreidimensionalen Objekten aus einem flüssigen, mittels Licht verfestigbaren Baumaterial. Dabei wird Baumaterial auf ein umlaufendes Band bzw. auf eine hin- und herbewegliche Folie aufgetragen und von dort möglichst blasenfrei auf ein Substrat übertragen.

Ferner sind in der EP 1 719 607 A1 sowie US 5 447 822 A generative Herstellungsverfahren beschreiben, bei denen die herzustellenden Objekte aus einem flüssigen oder zumindest fließfähigen Ausgangsmaterial hergestellt werden. In beiden Fällen handelt es sich um mittels Licht aushärtungsfähige Harze, die im Bereich einer Bauplattform schichtförmig aufgetragen werden.

In der EP 1 719 607 A wird über ein Endlosband Flüssigharz aus einem Materialreservoir aufgenommen, das sich schichtförmig einseitig oberflächig an das Endlosband anhaftet. Zum Abscheiden der Flüssigharzschicht auf einen Oberflächenbereich der Bauplattform wird das mit Flüssigharz beschichtete Umlaufband auf die Oberfläche eines zu erzeugenden Gegenstandes durch lokales Absenken des elastischen Bandes übertragen. Dies erfolgt beispielsweise durch eine dehnfähige Membran oder mit Hilfe einer Förderbandvorrichtung. Zum Abscheiden der Flüssigharzschicht bewegt sich die gesamte Bandvorrichtung über das auf der Bauplattform befindliche Werkstück. Die translatorische Bewegung des gesamten Bandapparates ist mit der Eigenbandbewegung derart synchronisiert, so dass beim Abscheiden der Flüssigharzschicht in das dreidimensionale Objekt keine horizontalen Kräfte einwirken.

In der US 5 447 822 A wird eine Vorrichtung beschrieben, bei der innerhalb eines mit UV-Licht-aushärtbarem Flüssigharz gefüllten Flüssigbades eine vertikal absenkbare Bauplattform vorgesehen ist. Mit Hilfe einer Schiebevorrichtung lässt sich eine oberste Flüssigharzschicht auf der Bauplattform unter Ausbildung einer gewünschten Schichtdicke exakt nivellieren, um sie nachfolgend mit Hilfe einer geeigneten Lichtquelle lokal auszuhärten.

### Darstellung der Erfindung

Der Erfindung liegt die Aufgabe zugrunde, eine Vorrichtung sowie ein Verfahren zur Herstellung eines Gegenstandes im Wege eines generativen Herstellungsverfahrens mit einem ein pulver- oder granulatartiges Material bevorratendes Materialreservoir, einer Bauplattform und einer Vorrichtung zur Beschickung einer Materialschicht auf die Bauplattform oder auf wenigstens eine auf der Bauplattform befindlichen Materialschicht, wobei die Vorrichtung zur Beschickung längs einer Bewegungsebene linearbeweglich gelagert ist, längs der das Materialreservoir und die Bauplattform nebeneinander angeordnet sowie zu dieser orthogonal auslenkbar sind, derart weiterzubilden, dass die im Bereich der Bauplattform aufzubringenden Materialschichten möglichst gleich verteilt und hoch verdichtet aufgebracht werden können. Die lösungsgemäße Vorrichtung soll insbesondere die Verarbeitung unterschiedlicher Materialien ermöglichen, so insbesondere Trockenpulvermaterialien als auch pastöse, fluidische bzw. suspendierte Materialien ohne dabei die Qualität eines gleich zu verteilenden Materialschichtauftrages einzubüßen. Die mit der Vorrichtung und dem Verfahren erreichbare Gründichte sollte mindestens 30 %, vorzugsweise mindestens 40% betragen.

Die Lösung der der Erfindung zugrunde liegenden Aufgabe ist im Anspruch 1 angegeben. Gegenstand des Anspruches 14 ist ein Verfahren zur Beschickung einer Materialschicht auf eine Bauplattform. Den Erfindungsgedanken vorteilhaft weiterbildende Merkmale sind Gegenstand der Unteransprüche sowie der weiteren Beschreibung insbesondere unter Bezugnahme auf die Ausführungsbeispiele zu entnehmen.
Die lösungsgemäße Vorrichtung gemäß den Merkmalen des Oberbegriffes des Anspruches 1 zeichnet sich dadurch aus, dass der Abstreif- und Auftragevorgang mit einem um zwei zueinander beabstandeten Formkörper dynamisch umlaufenden Band erfolgt, wobei das Band mit einem um einen Winkel α gegenüber der Bewegungsebene geneigt orientierten Bandbereich geführt wird, der unmittelbar dem Materialreservoir sowie der Bauplattform zugewandt ist und in Eingriff mit dem Material kommt, wodurch die Materialschicht während des Auftragevorgangs durch die Bewegung des geneigt orientierten Bandbereiches komprimiert wird.
Zudem wird der Bandbereich derart über das Materialreservoir geführt, so dass eine oberste Schicht aus dem Materialreservoir abgestreift und in Form einer keilförmig zwischen dem geneigt orientierten Bandbereich und der sich in Bewegungsrichtung an das Materialreservoir anschließenden Bauplattform oder einer bereits auf der Bauplattform aufgebrachten Materialschicht eingeschlossenen Materialportion in den Bereich der Bauplattform überführt wird, in der sie unter Ausbildung einer oberflächigen Materialschicht gleichmäßig verteilt wird.

Der Winkel α zwischen dem gegenüber der Bewegungsebene geneigt orientierten Bandbereich und der Bewegungsebene sollte ungleich 90° sein, vorzugsweise im Bereich zwischen 10° und 60° liegen.

Die nachfolgend auch als Bandapparat bezeichnete, lösungsgemäß ausgebildete Abstreifvorrichtung besteht in einer einfachsten Ausführungsvariante, die in Figur 1 schematisch illustriert ist, aus zwei Zylinderrollen 11, 12, deren Rollenachsen zueinander parallel ausgerichtet sind. Um beide Zylinderrollen 11, 12 ist ein Band 13 gespannt, das um beide Zylinderrollen 11, 12 abrollbar gelagert ist. Wenigstens eine Zylinderrolle 11 ist elektromotorisch angetrieben, so dass das Band 13 eine der in Figur 1 entnehmbare Bandumlaufrichtung (siehe Pfeildarstellung) mit einer vorgebbaren Bandumlaufgeschwindigkeit V_{Rot} aufweist. Der illustrierte Bandapparat wird relativ zur Bewegungsebene B, die der in Figur 2 illustrierten Abscheideebene 4 entspricht, in der in Figur 1 dargestellten Form von rechts nach links bewegt. Während der Linearbewegung überstreift die untere Zylinderrolle 12 mit dem um die Rolle umlaufenden Band 13 die über das Materialreservoir überstehende Materialschicht, die im Falle der Figur 2 der Materialschicht 1' entspricht, die sich als Materialportion in den keilförmig ausgebildeten Raumbereich R ansammelt, der einerseits vom dem dem Material zugewandten Bandflächenbereich 13' und andererseits von der Bewegungsebene B bzw. der Bauplattform oder der auf der Bauplattform bereits aufgebrachten Materialschichten eingeschlossen wird.

Aufgrund der Schrägstellung des Bandapparates um den Winkel α relativ zur Bewegungsebene B erfährt die von dem Materialreservoir 1 abgetragene Materialportion innerhalb des keilförmigen Raumbereiches R eine Vorkompression bedingt durch die Vorschubbewegung des Bandapparates und einer damit einhergehenden Materialstauwirkung in diesem Bereich. Hinzu kommt eine weitere, durch die Bandbewegung herrührende Material verdichtende Wirkung im Bereich der unteren Zylinderrolle 12. Das Band 13 wird um die Zylinderrolle 12 im Bereich der sich ausbildenden Materialschicht in Bewegungsrichtung des Bandapparates geführt, wodurch die sich ausbildende Materialschicht eine zusätzliche dynamische Verdichtung erfährt, zusätzlich zu einer über die Zylinderrolle 12 vertikal auf die Materialschicht wirkenden, verdichtenden Kraft Fv.

Die lösungsgemäße Vorrichtung vermag somit in zweifacher Weise das zumeist in Pulverform vorliegende Schichtmaterial zu komprimieren, nämlich zum einen durch die Vorverdichtung der Materialportion im Wege eines Materialstaus im keilförmigen Raumbereich R, zum anderen während der Materialdeposition auf der Bauplattform bzw. auf einer auf der Bauplattform befindlichen Materialschicht, durch einen durch die Umlaufrichtung des Bandes unterstützten Anpressdruckes auf das zu deponierende Material.

Um ein Anhaften des pulverförmigen Materials am Band selbst zu vermeiden, eignet sich in vorteilhafter Weise eine Oberflächenbeschichtung des Bandes, beispielsweise mittels PTFE/Teflon und/oder mit einer Nanobeschichtung.

Je nach Art des gewählten aufzutragenden Materials sowie auch Form und Größe der Bauplattform lassen sich die Parameter betreffend der translatorischen Bewegung des Bandapparates, der Rotation des Bandes sowie auch eine vertikale Kraftfaufbringung über den Bandapparat auf die aufzubringenden Materialschicht variieren, so dass in Abhängigkeit entsprechender Prozessbedingungen die Parameter einer Optimierung unterzogen werden können.

Das der lösungsgemäßen Vorrichtung zugrunde liegende Verfahrensprinzip beruht somit auf der Verwendung eines um wenigstens zwei zueinander beabstandete Formkörper dynamisch umlaufenden Bandes, wobei das Band mit einem um einen Winkel α gegenüber der Bewegungsebene geneigt orientierten Bandbereich geführt wird, der unmittelbar dem Materialreservoir sowie der Bauplattform zugewandt ist und in Eingriff mit dem Material kommt. Hierbei wird der Bandbereich derart über das Materialreservoir geführt, dass eine oberste Materialschicht vom Materialreservoir abgestreift wird und in Form einer zwischen dem geneigt orientierten Bandbereich und der sich in Bewegungsrichtung an das Materialreservoir anschließenden Bauplattform eingeschlossenen Materialportion in den Bereich der Bauplattform überführt wird, in der sie unter Ausbildung einer oberflächigen Materialschicht gleichmäßig in verdichtender Weise verteilt wird.

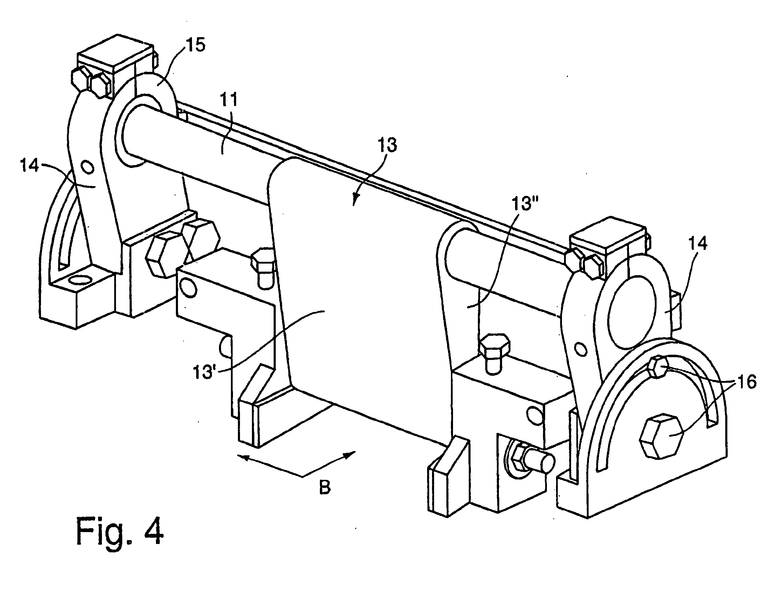

In Figur 4 ist ein Ausführungsbeispiel zur Realisierung eines in Figur 1 schematisch dargestellten Bandapparates gezeigt, das zwei Zylinderrollen 11, 12 (die mit dem Bezugszeichen 12 versehene Zylinderrolle ist durch das Band 13 verdeckt und somit nicht sichtbar) aufweist, die über einen Distanzhalter 14 mit jeweils parallel zueinander orientierten Zylinderrollenachsen mit fest vorgegebenen Abstand angeordnet sind. Der gegenseitige Abstand beider Zylinderrollen 11, 12 ist über einen Exzentermechanismus 15 variabel einstellbar, wodurch die Spannung des um beide Zylinderrollen 11, 12 umlaufenden Bandes 13 vorgegeben werden kann.

Um die Neigung zwischen beiden Zylinderrollen parallel aufgespannten Bandabschnitte 13', 13" relativ zur Bewegungsebene B variabel einstellen zu können, ist die obere Zylinderrolle 11 relativ zur unteren Zylinderrolle 12 über einen Schwenkmechanismus 16 drehbeweglich fixierbar angeordnet. Der gesamte Bandapparat bewegt sich relativ zu einem nicht dargestellten Materialreservoir sowie einer Bauplattform, wodurch eine fest vorgegebene Materialportion von Seiten des Materialreservoirs auf die Bauplattform übertragen wird.

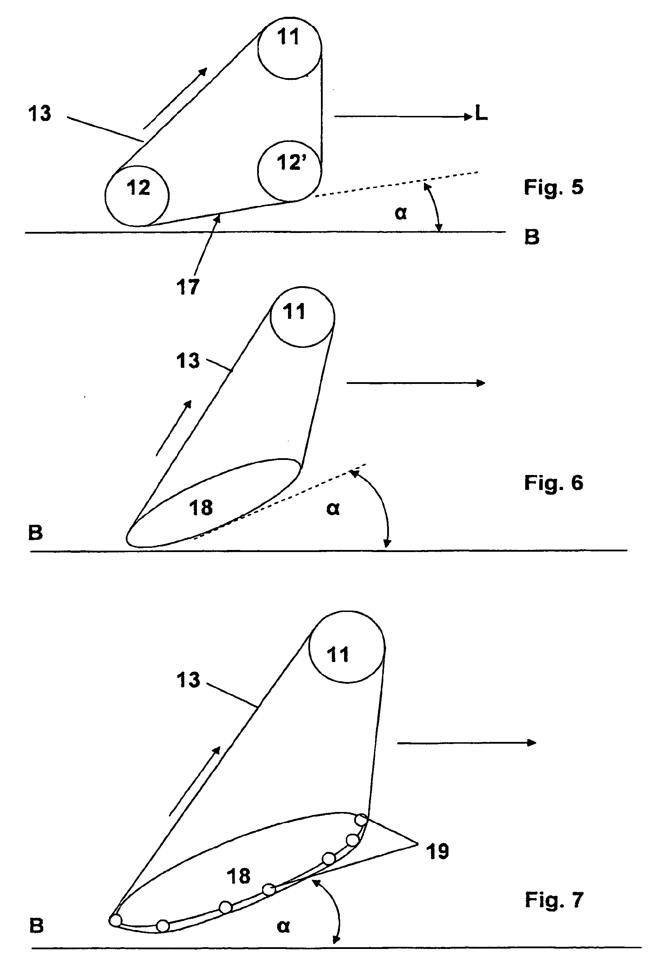

In Figur 5 ist ein weiteres Ausführungsbeispiel für einen lösungsgemäß ausgebildeten Bandapparat schematisiert dargestellt, der über drei Formkörper in Form von Zylinderrollen 11, 12, 12' verfügt, um die das Band 13 in der mit der Pfeildarstellung angegebenen Bandumlaufrichtung bewegt wird. Der mit der Bewegungsebene B um den Winkel α geneigte Bandabschnitt 17 tritt in Kontakt mit dem zu deponierenden Material und übt aufgrund der linear translatorischen Bewegung L des Bandapparates auf die in dem keilförmigen Raumbereich eingebrachte Materialportion eine vorkomprimierende Wirkung aus. Der Winkel α kann beliebig, vorzugsweise im Bereich zwischen 10° und 60° eingestellt werden. Vorzugsweise ist die Zylinderrolle 11 motorisch angetrieben, durch die das Band 13 in Umlaufrichtung versetzt wird. Selbstverständlich ist es möglich die Bandumlaufrichtung auch umzukehren, sofern dies einen den Auftragevorgang dienlichen Effekt nach sich zieht.

In Figur 6 ist ein weiteres Ausführungsbeispiel für einen lösungsgemäß ausgebildeten Bandapparat illustriert, das eine motorisch angetriebene Zylinderrolle 11 vorsieht, jedoch einen starr ausgebildeten Gleitkörper 18 vorsieht, um den das Band 13 in gleitendem Oberflächenkontakt geführt wird. Gleichsam den vorstehend beschriebenen Ausführungsbeispielen ist auch der länglich elypsoidartig ausgebildete Gleitkörper 18 relativ zur Bewegungsebene B um einen die Neigung des Gleitkörpers 18 repräsentierenden Winkel α geneigt angeordnet. Das Ausführungsbeispiel gemäß Figur 7 weist im Unterschied zum Ausführungsbeispiel gemäß Figur 6 einen Gleitkörper 18 auf, an dessen dem Band 13 zugewandten Oberflächenbereich Rollenelemente 19 angebracht sind, über die das Band 13 abrollbar gelagert ist. Auch in diesem Fall schließt das über die Gleitkörper 19 geführte Band 13 mit der Bewegungsebene B einen Winkel α ein, der in den vorstehend beschrieben Winkelbereich variabel einstellbar ist.

Mit Hilfe der lösungsgemäßen Vorrichtung ist es nicht nur möglich, pulverförmiges Trockenmaterial auf die Bauplattform in vorverdichteter Form als Materialschicht auf eine Bauplattform aufzutragen, vielmehr ermöglicht der Bandapparat auch eine Verarbeitung von Suspensionen in Form von Pasten oder Schlicker. Hierzu gilt es zur Vermeidung von Anhaftungen an der Bandoberfläche das Band entsprechend zu beschichten, beispielsweise mittels einer Nanobeschichtung auf Teflonbasis.

Darüber hinaus sieht eine bevorzugte Ausführungsvariante vor, das Band mit Poren zu durchsetzen, durch die Flüssigkeit aus einer fluidischen Materialschicht abgesaugt werden kann. Das Absaugen der Flüssigkeit kann durch Anlegen eines Unterdruckes beispielsweise im Bereich der unteren Zylinderrolle 11 (siehe die schematische Skizze in Figur 1) erfolgen, aber auch lediglich die innerhalb der Poren vorherrschenden Kapillarkräfte vermögen eine Abtrennung von oberflächigen Flüssiganteilen von der auf die Bauplattform abgeschiedenen Materialschicht zu bewerkstelligen.

Eine weiterführende Ausbildung des Bandapparates zur weiteren Verdichtung des im Bereich der Bauplattform abgeschiedenen Materials sieht eine dosierte Einkopplung von Vibrationen, vorzugsweise mittels Ultraschall in die auf der Bauplattform deponierte Materialschicht vor. Beispielsweise bietet es sich hierzu an, die Schwingungen über den mit dem Material über das Band in Kontakt tretenden Formkörper in das Material einzukoppeln. Beispielsweise könnte innerhalb der Zylinderrolle 12 gemäß Ausführungsbeispiel in Figur 1 oder innerhalb des in den Figuren 6 und 7 illustrierten Gleitkörpers 18 ein Ultraschallgenerator in Form einer Piezoaktors integriert sein, durch den der jeweilige Formkörper in Vibrationen versetzt wird, die derart stark ausgebildet sind, so dass die oberflächig aufzutragende Materialschicht im Bereich der Bauplattform komprimiert jedoch die darunter liegenden Schichten unbeeinträchtigt bleiben. Zudem würden sich die innerhalb des Formkörpers erzeugten Ultraschallwellen zumindest teilweise längs des Bandverlaufes ausbreiten, wodurch zusätzlich komprimierende Kräfte auf die innerhalb des keilförmigen Raumbereiches befindliche Materialportion einwirken. Auf diese Weise lässt sich die vorverdichtende Funktion des Bandapparates weiter verbessern.

### Bezugszeichenliste

- 1: Material
- 1': Überstehende Materialschicht
- 2: Materialreservoir
- 3: Behältnisboden
- 4: Abscheideebene
- 5: Abstreifvorrichtung
- 6: Bauplattform
- 7: Druckkopf
- 8: Auffangbehältnis
- 9: Materialportion
- 10: abgeschiedene Materialschicht
- 10': frisch abgeschiedene Materialschicht
- 11, 12: Zylinderrolle
- 13: Band
- 13', 13": Bandabschnitt
- 14: Abstandshalter
- 15: Exzentereinheit
- 16: schitierbare Schwenkvorrichtung
- 17: Bandabschnitt
- 18: Gleitkörper
- 19: Rollenkörper

## Patentansprüche

1. Vorrichtung zur Herstellung eines Gegenstandes im Wege eines generativen Herstellungsverfahrens mit einem ein pulver- oder granulatartiges Material (1) bevorratendes Materialreservoir (2), einer Bauplattform (6) und einer Vorrichtung zur Beschickung (5) einer Materialschicht (10) auf die Bauplattform (6) oder auf wenigstens eine auf der Bauplattform (6) befindlichen Materialschicht (10), wobei die Vorrichtung zur Beschickung (5) längs einer Bewegungsebene (B) linearbeweglich gelagert ist, längs der das Materialreservoir (2) und die Bauplattform (6) nebeneinander angeordnet sowie zu dieser orthogonal auslenkbar sind,
**dadurch gekennzeichnet, dass** die Vorrichtung zur Beschickung (5) ein um wenigstens zwei Formkörper gespannt umlaufendes Band (13) vorsieht, das zumindest bereichsweise an den Formkörpern anliegt,
dass ein das Band (13) in Umlauf um die wenigstens zwei Formkörper versetzender Antrieb vorgesehen ist,
dass das Band (13) in Bandlängserstreckung um die wenigstens zwei Formkörper einen relativ zu wenigstens einem Formkörper fest zuordenbaren Bandabschnitt (13') aufweist,
dass dem Bandabschnitt (13') ein Bandflächenbereich zuordenbar ist, der unmittelbar dem Materialreservoir (2) sowie der Bauplattform (6) zugewandt und gegenüber der Bewegungsebene (B) um einen Winkel α geneigt ist und mit der Bewegungsebene (B) einen keilförmigen Raumbereich (R) einschliesst,
dass der Bandabschnitt (13') während der Linearbewegung von dem Materialreservoir (2) zur Bauplattform (6) zumindest bereichsweise mit in dem Materialreservoir (2) bevorrateten Material derart in Berührung tritt, dass wenigstens ein Teil des Materials, in Form einer Materialportion (9), von dem Materialreservoir (2) derart abstreifbar ist, dass sich die Materialportion (9) in dem keilförmigen Raumbereich (R) ansammelt und als Materialschicht (10') auf die Bauplattform (6) derart auftragbar ist, dass die sich ausbildende Materialschicht (10') während des Auftragens komprimiert wird.

2. Vorrichtung nach Anspruch 1,
**dadurch gekennzeichnet, dass** wenigstens ein Formkörper als Zylinderrolle (11, 12) ausgebildet ist.

3. Vorrichtung nach Anspruch 1 oder 2,
**dadurch gekennzeichnet, dass** die Formkörper als Zylinderrollen (11, 12) ausgebildet sind mit jeweils parallel zueinander verlaufenden Rollenachsen.

4. Vorrichtung nach Anspruch 1 oder 2,
**dadurch gekennzeichnet, dass** wenigstens ein Formkörper als starrer Gleitkörper (18) ausgebildet ist, über dessen eine Teiloberfläche das Band gleitend geführt ist, und
dass die eine Teiloberfläche des Gleitkörpers (18) zur Unterstützung des um den Winkel α geneigten Bandflächenbereiches dient.

5. Vorrichtung nach Anspruch 1 oder 2,
**dadurch gekennzeichnet, dass** wenigstens ein Formkörper als starrer Formkörper ausgebildet ist,
dass der Formkörper eine Teiloberfläche aufweist, die der Unterstützung des um den Winkel α geneigten Bandflächenbereiches dient, und
dass zumindest an der Teiloberfläche Rollenkörper vorgesehen sind, über die das Band abrollend gelagert ist.

6. Vorrichtung nach Anspruch 2 oder 3,
**dadurch gekennzeichnet, dass** die Neigung des Bandflächenbereiches (13') um den Winkel α durch Verwendung im Rollendurchmesser unterschiedlich großer Zylinderrollen (11, 12) einstellbar ist.

7. Vorrichtung nach Anspruch 3,
**dadurch gekennzeichnet, dass** eine Zylinderrolle (11) relativ zur anderen Zylinderrolle (12) schwenkbar gelagert ist.

8. Vorrichtung nach einem der Ansprüche 2 bis 7,
**dadurch gekennzeichnet, dass** der Antrieb als motorisch angetriebene Zylinderrolle ausgebildet ist.

9. Vorrichtung nach einem der Ansprüche 1 bis 8,
**dadurch gekennzeichnet, dass** das Band (13) aus PTFE besteht oder eine Beschichtung aus PTFE aufweist.

10. Vorrichtung nach einem der Ansprüche 1 bis 9,
**dadurch gekennzeichnet, dass** die dem Material zugewandte Bandoberfläche (13') eine Nanobeschichtung aufweist.

11. Vorrichtung nach einem der Ansprüche 1 bis 10,
**dadurch gekennzeichnet, dass** das Band (13) durchgehende Poren aufweist.

12. Vorrichtung nach einem der Ansprüche 1 bis 6,
**dadurch gekennzeichnet, dass** der das Band (13) in Umlauf um die Formkörper versetzende Antrieb derart vorgesehen ist, dass sich jener Bandabschnitt (13'), der mit dem Material in Berührung tritt, eine von der Bewegungsebene (B) abgewandte Bandumlaufrichtung aufweist.

13. Vorrichtung nach einem der Ansprüche 1 bis 12,
**dadurch gekennzeichnet, dass** in wenigstens einem Formkörper eine Schwingungseinheit zur Erzeugung von Vibrationen integriert ist.

14. Verfahren zur Beschickung einer Materialschicht auf eine Bauplattform (6) oder auf wenigstens eine auf der Bauplattform (6) befindlichen Materialschicht (10) zur Herstellung eines Gegenstandes im Wege eines generativen Herstellungsverfahrens, bei dem pulver- oder granulatartiges Material portionsweise durch Abstreifen von einem Materialreservoir (2) entnommen und im Bereich der Bauplattform (6) unter Ausbildung einer Materialschicht (10') aufgetragen wird, **dadurch gekennzeichnet, dass** der Abstreif- und Auftragevorgang mit einem um zwei zueinander beabstandeten Formkörper dynamisch umlaufenden Band (13) erfolgt,
dass das Band (13) mit einem um einen Winkel α gegenüber der Bewegungsebene (B) geneigt orientierten Bandbereich (13') geführt wird, der unmittelbar dem Materialreservoir (2) sowie der Bauplattform (6) zugewandt ist und in Eingriff mit dem Material kommt, dass die Materialschicht (10') während des Auftragevorgangs durch die Bewegung des geneigt orientierten Bandbereiches (13') komprimiert wird,
dass der Bandbereich (13') derart über das Materialreservoir (2) geführt wird, dass eine oberste Schicht aus dem Materialreservoir (2) abgestreift und in Form einer keilförmig zwischen dem geneigt orientierten Bandbereich (13') und der sich in Bewegungsrichtung an das Materialreservoir (2) anschließenden Bauplattform (6) oder einer bereits auf der Bauplattform (6) aufgebrachten Materialschicht (10) eingeschlossenen Materialportion (9) in den Bereich der Bauplattform (6) überführt wird, in der sie unter Ausbildung einer oberflächigen Materialschicht (10') gleichmäßig verteilt wird.

15. Verfahren nach Anspruch 14,
**dadurch gekennzeichnet, dass** das Band (13) derart um die Formkörper umläuft, dass jener Bandbereich (13'), der in Eingriff mit dem Material gerät, eine Bewegungskomponente in Bewegungsrichtung (B) aufweist.

16. Verfahren nach Anspruch 14 oder 15,
**dadurch gekennzeichnet, dass** die keilförmig eingeschlossene Materialportion (9) durch die Bewegung des geneigt orientierten Bandbereiches (13') komprimiert wird.

17. Verfahren nach einem der Ansprüche 14 bis 16,
**dadurch gekennzeichnet, dass** als generatives Herstellungsverfahren dreidimensionales Drucken oder Lasersintern eingesetzt wird.

## Claims

1. A device for producing an object by means of a generative production process with a material reservoir (2) storing a powder-like or granulate-like material (1), a build platform (6) and a device for the feeding (5) of a material layer (10) onto the build platform (6) or onto at least one material layer (10) present on the build platform (6), wherein the device for the feeding (5) is mounted linearly mobile along a movement plane (B), along which plane the material reservoir (2) and the build platform (6) are disposed next to one another and are able to be deflected orthogonally with respect to said plane, **characterised in that** the device for the feeding (5) provides a belt (13) circulating around at least two shaped bodies in a tensioned manner, said belt lying against the shaped bodies at least in certain areas,
that a drive causing the belt (13) to circulate around the at least two shaped bodies is provided,
that the belt (13) comprises a belt section (13') fixedly assignable relative to at least one shaped body in the belt longitudinal extension around the at least two shaped bodies,
that a belt surface region can be assigned to the belt section (13'), said belt surface region directly facing the material reservoir (2) and the build platform (6) and being inclined at an angle α with respect to the movement plane (B) and enclosing a wedge-shaped spatial region (R) with the movement plane (B),
that the belt section (13') comes into contact at least in certain areas with material stored in the material reservoir (2) during the linear movement from the material reservoir (2) to the build platform (6), in such a way that at least a part of the material, in the form of a material portion (9), can be scraped off from the material reservoir (2), in such a way that the material portion (9) collects in the wedge-shaped spatial region (R) and can be deposited as a material layer (10') on the build platform (6) in such a way that the forming material layer (10') is compressed during the deposition.

2. The device according to claim 1,
**characterised in that** at least one shaped body is constituted as a cylindrical roller (11, 12).

3. The device according to claim 1 or 2,
**characterised in that** the shaped bodies are constituted as cylindrical rollers (11, 12) with roller axes each running parallel to one another.

4. The device according to claim 1 or 2,
**characterised in that** at least one shaped body is constituted as a rigid slide body (18), over a partial surface whereof the belt is guided in a sliding manner, and
that the one partial surface of the slide body (18) is used to support the belt surface region inclined at angle α.

5. The device according to claim 1 or 2,
**characterised in that** at least one shaped body is constituted as a rigid shaped body,
that the shaped body comprises a partial surface which is used to support the belt surface region inclined at angle α, and
that roller bodies are provided at least on the partial surface, by means of which roller bodies the belt is mounted in a roll-off manner.

6. The device according to claim 2 or 3,
**characterised in that** the inclination of the belt surface region (13') is adjustable through angle α by using cylindrical rollers (11, 12) differing in the size of their roller diameter.

7. The device according to claim 3,
**characterised in that** one cylindrical roller (11) is mounted in a swivellable manner relative to the other cylindrical roller (12).

8. The device according to any one of claims 2 to 7,
**characterised in that** the drive is constituted as a motor-driven cylindrical roller.

9. The device according to any one of claims 1 to 8,
**characterised in that** the belt (13) is made of PTFE or comprises a coating of PTFE.

10. The device according to any one of claims 1 to 9,
**characterised in that** the belt surface (13') facing the material comprises a nano-coating.

11. The device according to any one of claims 1 to 10, **characterised in that** the belt (13) comprises throughpores.

12. The device according to any one of claims 1 to 6,
**characterised in that** the drive causing the belt (13) to circulate around the shaped bodies is provided in such a way that the belt section (13') coming into contact with the material has a belt circulating direction facing away from the movement plane (B).

13. The device according to any one of claims 1 to 12,
**characterised in that** an oscillation unit for generating vibrations is integrated in at least one shaped body.

14. A method for the feeding of a material layer onto a build platform (6) or onto at least one material layer (10) present on the build platform (6) for producing an object by means of a generative production process, wherein powder-like or granulate-like material is removed in portions by stripping from a material reservoir (2) and is deposited in the region of the build platform (6) thereby forming a material layer (10'),
**characterised in that** the stripping and deposition process takes place with a belt (13) circulating dynamically around two shaped bodies spaced apart from one another,
that the belt (13) is guided with a belt region (13') orientated inclined at an angle α with respect to the movement plane (B), said belt region directly facing the material reservoir (2) and the build platform (6) and engaging with the material, that the material layer (10') is compressed during the deposition process by the movement of the belt region (13') orientated in an inclined manner,
that the belt region (13') is guided over the material reservoir (2) in such a way that a first layer is scraped off from the material reservoir (2) and is transferred, in the form of a material portion (9) enclosed in the form of a wedge between the belt region (13') orientated in an inclined manner and the build platform (6) or a material layer (10) already deposited on the build platform (6) following the material reservoir (2) in the direction of movement, into the region of the build platform (6) in which it is distributed uniformly thereby forming a superficial material layer (10').

15. The method according to claim 14,
**characterised in that** the belt (13) circulates around the shaped bodies in such a way that the belt region (13') engaging with the material has a movement component in the direction of movement (B).

16. The method according to claim 14 or 15,
**characterised in that** the material portion (9) enclosed in the form of a wedge is compressed by the movement of the belt region (13') orientated in an inclined manner.

17. The method according to any one of claims 14 to 16,
**characterised in that** three-dimensional printing or laser sintering is used as a generative production process.

## Revendications

1. Dispositif destiné à la fabrication d'un objet par voie de procédé de fabrication génératif, avec un réservoir de matière (2) pour stocker une matière (1) pulvérulente ou en granulés, une plateforme de construction (6) et un dispositif de chargement (5) d'une couche de matière (10) sur la plateforme de construction (6) ou sur au moins une couche de matière (10) se trouvant sur la plateforme de construction (6), le dispositif de chargement (5) étant mobile de manière linéaire le long d'un plan de déplacement (B) le long duquel le réservoir de matière (2) et la plateforme de construction (6) sont disposés côte à côte et de manière à pouvoir être déviés à l'orthogonale par rapport à celui-ci, **caractérisé en ce que** le dispositif de chargement (5) prévoit une bande (13) qui est en rotation en étant tendue autour d'au moins deux corps moulés, qui est adjacente au moins par zones aux corps moulés,
**en ce qu'**il est prévu un entraînement plaçant la bande (13) en rotation autour des au moins deux corps moulés,
**en ce que** dans l'extension longitudinale de la bande, la bande (13) comporte autour des au moins deux corps moulés une partie de bande (13') qui peut être fixement affectée par rapport à au moins un corps moulé,
**en ce qu'**à la partie de bande (13') peut être affectée une zone de surface de bande qui est directement dirigée vers le réservoir de matière (2) et vers la plateforme de construction (6) et qui est inclinée de la valeur d'un angle α par rapport au plan de déplacement (B) et qui inclut avec le plan de déplacement (B) une zone d'espace (R) cunéiforme,
**en ce que** pendant le déplacement linéaire du réservoir de matière (2) vers la plateforme de construction (6), la partie de bande (13') entre en contact au moins par zones avec la matière stockée dans le réservoir de matière (2), de telle sorte qu'au moins une partie de la matière, sous la forme d'une portion de matière (9) puisse être enlevée du réservoir de matière (2) de sorte que la portion de matière (9) s'accumule dans la zone d'espace (R) cunéiforme et puisse être appliquée en tant que couche de matière (10') sur la plateforme de construction (6), de manière à ce que pendant l'application, la couche de matière (10') qui se forme soit comprimée.

2. Dispositif selon la revendication 1,
**caractérisé en ce qu'**au moins un corps moulé est conçu en tant que rouleau cylindrique (11, 12).

3. Dispositif selon la revendication 1 ou la revendication 2,
**caractérisé en ce que** les corps moulés sont conçus en tant que rouleaux cylindriques (11, 12) avec chacun des axes de rouleau s'étendant à la parallèle l'un par rapport à l'autre.

4. Dispositif selon la revendication 1 ou la revendication 2,
**caractérisé en ce qu'**au moins un corps moulés est conçu en tant que corps de glissement (18) rigide, par-dessus la surface partielle duquel la bande est guidée en glissant et
**en ce que** ladite surface partielle du corps de glissement (18) sert à supporter la zone de surface de bande inclinée de la valeur de l'angle α.

5. Dispositif selon la revendication 1 ou la revendication 2,
**caractérisé en ce qu'**au moins un corps moulé est conçu en tant que corps moulé rigide,
**en ce que** le corps moulé comporte une surface partielle qui sert à supporter la zone de surface de bande inclinée de la valeur de l'angle α,
**en ce qu'**au moins sur la surface partielle sont prévus des corps de roulement sur lesquels la bande est logée en se déroulant.

6. Dispositif selon la revendication 2 ou la revendication 3,
**caractérisé en ce que** l'inclinaison de la zone de surface de bande (13') de la valeur de l'angle α est réglable par l'utilisation de rouleaux cylindriques (11, 12) de différentes dimensions en ce qui concerne le diamètre du rouleau.

7. Dispositif selon la revendication 3,
**caractérisé en ce qu'**un rouleau cylindrique (11) est logé de manière à pouvoir pivoter par rapport à l'autre rouleau cylindrique (12).

8. Dispositif selon l'une quelconque des revendications 2 à 7,
**caractérisé en ce que** l'entraînement est conçu en tant que rouleau cylindrique entraîné par moteur.

9. Dispositif selon l'une quelconque des revendications 1 à 8,
**caractérisé en ce que** la bande (13) est constituée de PTFE ou comporte un revêtement en PTFE.

10. Dispositif selon l'une quelconque des revendications 1 à 9,
**caractérisé en ce que** la surface de bande (13') dirigée vers la matière comporte un nano-revêtement.

11. Dispositif selon l'une quelconque des revendications 1 à 10,
**caractérisé en ce que** la bande (13) comporte des pores en continu.

12. Dispositif selon l'une quelconque des revendications 1 à 6,
**caractérisé en ce que** l'entraînement plaçant la bande (13) en rotation autour des corps moulés est prévu de telle sorte que la partie de bande (13') qui entre en contact avec la matière présente une direction de rotation de bande s'éloignant du plan de déplacement (B).

13. Dispositif selon l'une quelconque des revendications 1 à 12,
**caractérisé en ce que** dans au moins un corps moulé est intégrée une unité vibratoire pour créer des vibrations.

14. Procédé de chargement d'une couche de matière sur une plateforme de construction (6) ou sur au moins une couche de matière (10) se trouvant sur la plateforme de construction (6) pour la fabrication d'un objet par voie d'un procédé de construction génératif, lors duquel on prélève une matière pulvérulente ou en granulés par portions, par enlèvement à partir d'un réservoir de matière (2) et on l'applique dans la zone de la plateforme de construction (6) en formant une couche de matière (10'),
**caractérisé en ce que** le processus d'enlèvement et d'application s'effectue à l'aide d'une bande (13) en rotation dynamique autour de deux corps moulés écartés,
**en ce que** la bande (13) est guidée par une zone de bande (13') orientée en inclinaison de la valeur d'un angle α par rapport au plan de déplacement (B) qui est directement dirigée vers le réservoir de matière (2) et vers la plateforme de construction (6) et qui entre en engagement avec la matière, **en ce que** pendant le processus d'application, la couche de matière (10') est comprimée par le déplacement de la zone de bande (13') orientée en inclinaison,
**en ce que** la zone de bande (13') est conduite par-dessus le réservoir de matière (2) de telle sorte qu'une couche supérieure soit enlevée du réservoir de matière (2) et sous la forme d'une portion de matière (9) contenue sous forme cunéiforme entre la zone de bande (13') orientée en inclinaison et la plateforme de construction (6) se raccordant au réservoir de matière (2) dans la direction de déplacement ou une portion de matière (9) renfermée dans une couche de matière (10) déjà appliquée sur la plateforme de construction (6), soit transférée dans la zone de la plateforme de construction (6) dans laquelle elle est distribuée régulièrement en formant un couche de matière (10') superficielle.

15. Procédé selon la revendication 14,
**caractérisé en ce que** la bande (13) est en rotation autour des corps moulés de telle sorte que la zone de bande (13') qui entre en engagement avec la matière présente une composante de déplacement dans la direction de déplacement (B).

16. Procédé selon la revendication 14 ou la revendication 15,
**caractérisé en ce que** la portion de matière (9) contenue sous forme cunéiforme est comprimé par le déplacement de la zone de bande (13') orientée en inclinaison.

17. Procédé selon l'une quelconque des revendications 14 à 16,
**caractérisé en ce qu'**en tant que procédé de fabrication génératif, on utilise une impression tridimensionnelle ou un frittage au laser.
